# EUROPEAN PATENT APPLICATION

(11) **EP 3 054 660 A1**
(43) Date of publication of application: **10.08.2016**
(21) Application number: 16154013.3
(22) Date of filing: 03.02.2016
(51) Int. Cl.: H04M 3/42, H04L 29/14

(54) **MANAGEMENT SYSTEM, COMMUNICATION SYSTEM, MANAGEMENT METHOD, AND RECORDING MEDIUM**

(30) Priority: 09.02.2015 JP 2015022901
(71) Applicant: Ricoh Company, Ltd., Tokyo 143-8555 (JP)
(72) Inventor: NAKAMURA, Shigeru, Tokyo, 143-8555 (JP)
(74) Representative: Schwabe - Sandmair - Marx

(57) **Abstract**

A management system is provided. The management system includes a management unit configured to, when communication between a communication-startrequesting-source communication terminal and a destination communication terminal is disrupted, store specifying information for specifying the communication-startrequesting-source communication terminal, and a selection unit configured to, when a plurality of communication terminals are requesting a communication start with the destination communication terminal, select one of the plurality of the communication terminals to be connected to the destination communication terminal based on the specifying information stored by the management unit.

## Description

### BACKGROUND OF THE INVENTION

### 1. Field of the Invention

The present invention relates to a management system, a communication system, a management method, and a recording medium.

### 2. Description of the Related Art

In recent years, in accordance with, for example, a demand for reducing travel cost and time, a communication system which provides calling and conferencing over a communication network such as the Internet or a dedicated line or the like has become popular. In this kind of communication system, when a communication between communication terminals is started, content data such as image data and audio data are sent and received, and thus, communications between sites are realized.

Further, a method is known in which, responding to a connection request from a video phone, a currently available operator terminal is selected, and a communication channel for video and audio is established between the selected operator terminal and the video phone (refer to Patent Document 1).

According to Patent Document 1, it is disclosed that in the case where two or more terminals are waiting for a communication to start, a call is automatically provided for the terminal whose waiting time is the longest.

However, if a method is used in which the call is automatically provided for the terminal whose waiting time is the longest, then, there is a problem that, when a communication session between terminals are disrupted, the disrupted communication session can only be reestablished after a call is provided for a terminal that had requested a communication to start before the disruption.

### SUMMARY OF THE INVENTION

A management system according to the present invention includes a management unit configured to, when communication between a communication-start-requesting-source communication terminal
and a destination communication terminal is disrupted, store specifying information for specifying the communication-start-requesting-source communication terminal, and a selection unit configured to, when a plurality of the communication terminals are requesting a communication start with the destination communication terminal, select one of the plurality of the communication terminals to be connected to the destination communication terminal based on the specifying information stored by the management unit.

As described above, according to the present invention, when reconnecting to reestablish the communications between communication terminals after the communication has been disrupted, it becomes possible to make the reconnection before a call is provided for a communication terminal that had requested a call to start before the disruption.

### [Citation List]

### [Patent Document]

[Patent Document 1] Japanese Laid-Open Patent Application No. 2005-064860

### BRIEF DESCRIPTION OF THE DRAWINGS

Fig. 1 is a schematic diagram of a communication system according to an embodiment.
Fig. 2 is an external view of a terminal according to an embodiment.
Fig. 3 is a hardware configuration diagram of a terminal according to an embodiment.
Fig. 4 is a hardware configuration diagram of a management system, a relay apparatus, a program providing system, or a maintenance system according to an embodiment.
Fig. 5 is a software configuration diagram of a terminal according to an embodiment.
Fig. 6 is a functional block diagram of a terminal and a management system included in a communication system according to an embodiment.
Fig. 7A is a conceptual diagram of a terminal management table managed by a management system. Fig. 7B is a conceptual diagram of a waiting information management table managed by the management system.
Fig. 8 is a sequence diagram illustrating a process of starting a communication.
Fig. 9 is a flowchart illustrating a process of selecting a terminal.
Fig. 10 is a sequence diagram illustrating a process of reconnection of a terminal.
Fig. 11 is a flowchart illustrating a process of selecting a terminal.
Fig. 12 is a flowchart illustrating a process of selecting a terminal.

### DETAILED DESCRIPTION OF THE PREFERRED EMBODIMENTS

In the following, referring to the drawings, an embodiment of the present invention will be described in detail. It should be noted that, in the following, "communication terminal" may be simply described as "terminal", and "communication management system" may be simply described as "management system".

### <<Overall configuration of communication system 1>

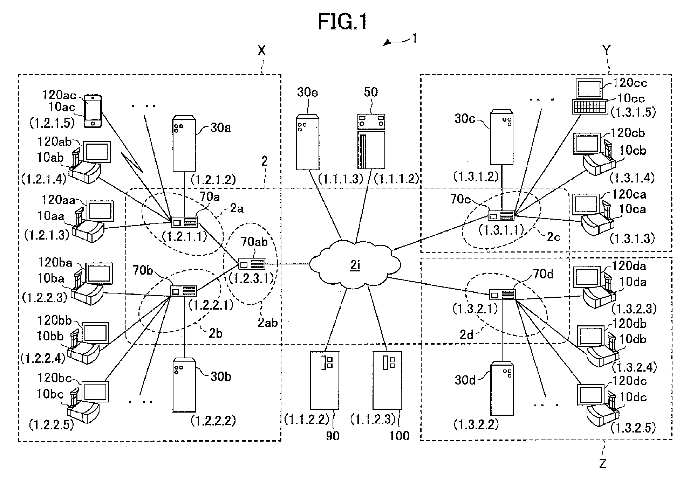

Fig. 1 is a schematic diagram of a communication system 1 according to an embodiment of the present invention. As shown in Fig. 1,
the communication system 1 includes a plurality of terminals (10aa, 10ab,...), displays (120aa, 120ab,...) for the terminals (10aa, 10ab,...), a plurality of relay apparatuses (30a, 30b, 30c, 30d, 30e), a management system 50, a program providing system 90, and a maintenance system 100. A video conference, or the like, between remote places can be realized by having communication of image data or audio data as an example of content data performed by the communication system 1. It should be noted that a plurality of routers (70a, 70b, 70c, 70d, 70ab) select an optimal route of the content data.

The terminals (10aa, 10ab, 10ac,...), the relay apparatus 30a, and the router 70a are connected to each other and are capable of communicating with each other via a LAN 2a. The terminals (10ba, 10bb, 10bc,...), the relay apparatus 30b, and the router 70b are connected to each other and are capable of communicating with each other via a LAN 2b. Further, the LAN 2a and the LAN 2b are connected to each other and are capable of communicating with each other by a dedicated line 2ab including the router 70ab. Further, the LAN 2a, the LAN 2b, and the dedicated line 2ab are provided in a predetermined area X. It should be noted that the devices are not necessarily connected to each other by the dedicated line, but they may be directly connected to the Internet 2i.

The terminals (10ca, 10cb, 10cc,...), the relay apparatus 30c, and the router 70c are connected to each other and are capable of communicating with each other via a LAN 2c. The LAN 2c is provided in a predetermined area Y.

The terminals (10da, 10db, 10dc,...), the relay apparatus 30d, and the router 70d are connected to each other and are capable of communicating with each other via a LAN 2d. The LAN 2d is provided in a predetermined area Z. The area X, the area Y, and the area Z may be in the same country or in different countries.

The area X, the area Y, and the area Z are connected to each other and are capable of communicating with each other via the Internet 2i through respective routers (70ab, 70c, 70d). It should be noted that a call center is located in the area Z. Each terminal 10 in the area X and the area Y can receive a reception service by connecting to terminals (10da, 10db, 10dc,...) in the call center.

It should be noted that, in the following, an arbitrary terminal of the terminals (10aa, 10ab,...) is described a "terminal 10", an arbitrary display of the displays (120aa, 120ab,...) is described as a "display 120", and an arbitrary relay apparatus of the relay apparatuses (30a, 30b, 30c, 30d, 30e) is described as a "relay apparatus 30". Further, an arbitrary router of the routers (70a, 70b, 70c, 70d, 70ab) is described as a "router 70".

Further, the management system 50, the program providing system 90, and the maintenance system 100 are connected to the Internet 2i. It should be noted that the management system 50, the program providing system 90, and the maintenance system 100 may be located in the areas (X, Y, Z), or may be located in an area other than the areas (X, Y, Z).

Further, a communication network 2 according to the present embodiment includes the LAN 2a, the LAN 2b, the dedicated line 2ab, the Internet 2i, LAN 2c, and the LAN 2d. In the communication network 2, there may be an area in which not only wired communication is performed, but also wireless communication such as communication via WiFi (Wireless Fidelity), Bluetooth (registered trade mark), a mobile telephone network or the like is performed.

Further, in Fig. 1, a set of four numbers shown under each terminal 10, the relay apparatus 30, the management system 50, each router 70, the program providing system 90, or the maintenance system 100 illustrates a typical IP address of IPv4 in a simplified manner. For example, an IP address of the terminal 10aa is "1. 2. 1. 3". Further, instead of IPv4, IPv6 may be used. However, for the purpose of simplicity, IPv4 is used in the description.

Further, in each terminal 10, when a video conference application 1031 or a reception application 1032 which will be described later is started, communications between users become available by sending and receiving content data including audio data or image data. Further, the terminal 10 sends and receives call data by using a predetermined communication method (a call control method for connecting or disconnecting with a destination, and a coding method for IP packetizing the call data). It should be noted that, in the following, "application" may be abbreviated as "appl" for short.

Further, as the call control method described above, (1) SIP (Session Initiation Protocol), (2) H.323, (3) enhanced SIP protocol, (4) protocol for instant messenger, (5) protocol utilizing a MESSAGE method of SIP, (6) protocol of Internet Relay Chat (IRC), (7) protocol enhanced from a protocol for instant messenger, or the like, can be listed. The above (4) protocol for instant messenger is a protocol used for, for example, (4-1) Extensible Messaging and Presence Protocol (XMPP), (4-2) ICQ (registered trademark), AIM (registered trademark), or Skype (registered trademark). Further, the above (7) Jingle, for example, is a protocol enhanced from the protocol for instant messenger.

### «Hardware configuration of the embodiment»

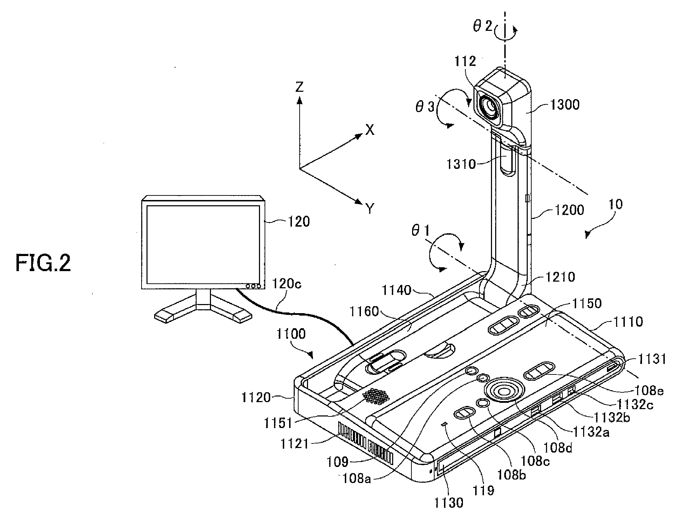

Next, a hardware configuration of the present embodiment will be described. Fig. 2 is an external view of a terminal 10 according to an embodiment. As shown in Fig. 2, the terminal 10 includes a housing 1100, an arm 1200, and a camera housing 1300. In a front wall 1120 of the housing 1100, there is an air intake surface 1121 formed with a plurality of air intake holes, and, in a rear wall 1110 of the housing 1100, there is an air exhaust surface formed with a plurality of air exhaust holes. With the above arrangement, by driving a cooling fan embedded in the housing 1100, it becomes possible to take in air in front of the terminal 10 through the air intake surface 1121, and to exhaust the air to the rear of the terminal 10 through the air exhaust surface. In a right side wall 1130 of the housing 1100, a sound pickup hole 1131 is formed, and, by using a built-in mike 114 which will be described later, sound such as voice, sound of things, noise, etc., can be picked up.

In the right wall 1130 side of the housing 1100, an operation panel 1150 is formed. In the operation panel 1150, there are a plurality of operation buttons (108a through 108e), a power supply switch 109, and an alarm lamp 119, which will be described later. Also, a sound output surface 1151 is formed in the operation panel 1150, which is formed by a plurality of sound output holes used for passing output sound from a built-in speaker 115 which will be described later. Further, in the left wall 1140 side of the housing 1100, a housing unit 1160 is formed as a concave portion for housing the arm 1200 and the camera housing 1300. In the right wall 1130 of the housing 1100, a plurality of connection ports (1132a through 1132c) are formed for electrically connecting cables for an external device connection interface 118 which will be described later. On the other hand, in the left wall 1140 of the housing 1100, a connection port is formed for electrically connecting a cable 120c of a display 120 for a display interface (I/F) 117.

It should be noted that, in the following, an arbitrary operation button of the operation buttons (108a through 108e) will be described as an "operation button 108", and an arbitrary connection port of the connection ports (1132a through 1132c) will be described as a "connection port 1132".

Next, the arm 1200 is attached to the housing 1100 via a torque hinge 1210, and is capable of rotating in an up-and-down direction within a range of tilt angle θ1 of 135 degrees with respect to the housing 1100. Fig. 2 illustrates a state in which the tilt angle is 90 degrees.

In the camera housing 1300, there is a built-in camera 112 which will be described later and is capable of taking images of a user, a document, a room, etc. Further, in the camera housing 1300, a torque hinge 1310 is formed. Further, the camera housing 1300 is attached to the arm 1200 via the torque hinge 1310, and is capable of rotating in a right-and-left direction within a range of +/- 180 degrees of pan angle θ2, and rotating in an up-and-down direction within a range of +/- 45 degrees of tilt angle θ3, with respect to the arm 1200, assuming that Fig. 2 illustrates a state in which θ2 and θ3 are zero degrees.

It should be noted that an external view of the terminal 10 is not limited to the view shown in Fig. 2, which is just an example. As another example, the terminal 10 may be a general-purpose computer, a mobile phone terminal, a projector, an electronic white board, digital signage, or the like (refer to terminals (10ac, 10cc) in Fig. 1). When a computer used for the terminal 10 does not include a mike and a camera, an external mike and an external camera can be connected to the computer. Further, in the case where the terminal 10 is a mobile telephone terminal, or the like, the terminal 10 may be connected to the Internet 2i through wireless communication utilizing a wireless LAN, a mobile telephone network, etc. As described above, a general-purpose computer or a mobile telephone terminal can be used as a terminal 10 according to the present embodiment. Further, in the case where a general-purpose computer is used as a terminal 10, an application may be installed beforehand which causes the computer to perform processes of the terminal 10 which will be described later.

It should be noted that external views of the management system 50, the program providing system 90, and the maintenance system 100 are the same as an external view of a typical server computer, and thus, descriptions of the external views will be omitted.

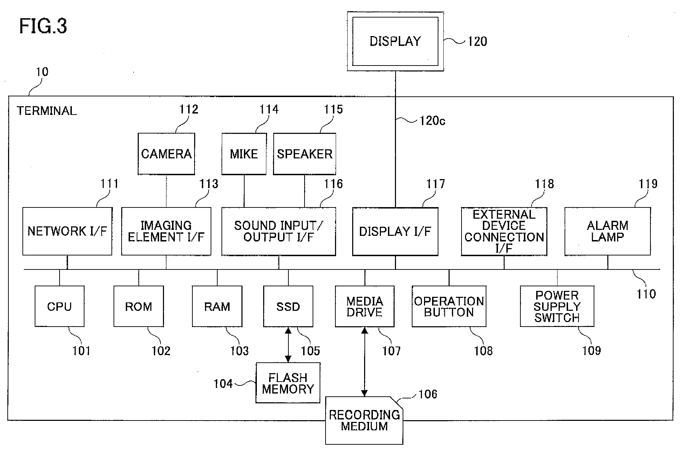

Fig. 3 is a hardware configuration of a terminal 10 according to an embodiment. The terminal 10 includes a central processing unit (CPU) 101 for controlling overall operations of the terminal 10, a read only memory (ROM) 102 in which programs used for driving the CPU 101 such as an initial program loader are stored, a random access memory (RAM) 103 which is used for a work area of the CPU 101, a flash memory 104 in which programs for the terminal 10, and various kinds of data including image data, audio data, etc., are stored, a solid state drive (SSD) 105 which controls writing and reading the various data to and from the flash memory 104 according to the control of the CPU 101, a media interface 107 which controls writing and reading data to and from a recording medium 106 including a flash memory, an integrated circuit (IC) card, etc., the operation buttons 108 operated for, for example, selecting a destination of the terminal 10, the power supply switch 109 for switching ON/OFF the power supply of the terminal 10, and a network interface (I/F) 111 for performing data transmission by utilizing the communication network 2.

Further, the terminal 10 includes the built-in camera 112 which captures image data by taking an image of a subject according to the control of the CPU 101, an imaging element interface 113 which controls driving of the camera 112, the built-in mike 114 for inputting sound, a built-in speaker 115 for outputting sound, a sound input/output interface 116 for processing input/output of an audio signal between the mike 114 and the speaker 115 according to the control of the CPU 101, the display interface (I/F) 117 for transmitting image data to the external display 120 according to the control of the CPU 101, the external device connection interface (I/F) 118 for connecting various external devices, the alarm lamp 119 for indicating an error of various functions of the terminal 10, and a bus line 110 such as an address bus, a data bus, etc., for electrically connecting the above elements as shown in Fig. 3.

The display 120 is a display unit which includes a liquid crystal or an organic electroluminescence (EL) panel used for displaying a subject image, or the like. Further, the display 120 is connected to the display I/F 117 via the cable 120c. The cable 120c may be a cable for an analog RGB (VGA) signal, a cable for a component video, or a cable for a signal of High-Definition Multimedia Interface (HDMI) (registered trademark) or Digital Video Interactive (DVI).

The camera 112 includes a lens and a solid-state image sensing device which is used for converting light into electricity and computerizing the subject image, and as the solid-state image sensing device, Complementary Metal Oxide Semiconductor (CMOS), Charge Coupled Device (CCD), etc., are used.

To the external device connection I/F 118, via a Universal Serial Bus (USB) cable, or the like, which is inserted into the connection port 1132 of the housing 1100, external devices such as an external camera, an external mike, and an external speaker can be electrically connected. In the case where the external camera is connected, according to the control of the CPU 101, priority is given to the external camera to be driven over the built-in camera 112. Similarly, in the case where an external mike is connected or an external speaker is connected, according to the control of the CPU 101, priority is given to the external mike or the external speaker over the built-in mike 114 or the built-in speaker 115, respectively.

It should be noted that the recording medium 106 is detachable from the terminal 10. Further, it is not limited to the flash memory 104 that is used, and, Electrically Erasable and Programmable ROM (EEPROM), or the like may be used as long as it is a non-volatile memory to/from which data are written/read according to the control of the CPU 101.

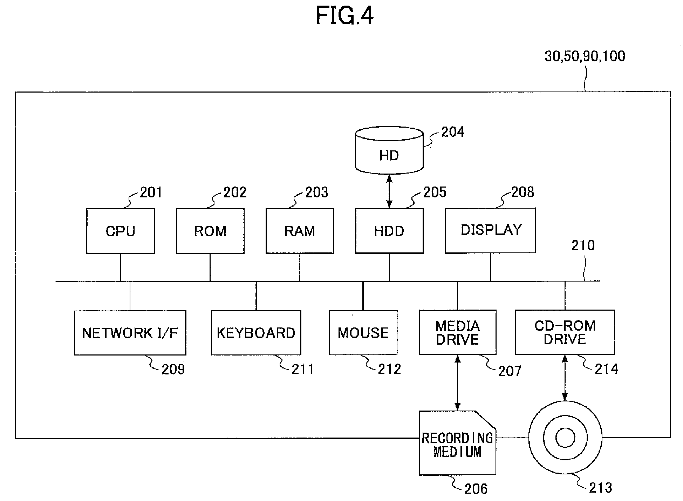

Fig. 4 is a hardware configuration diagram of a management system 50 according to an embodiment. The management system 50 includes a CPU 201 for controlling overall operations of the management system 50, a ROM 202 in which programs used for driving the CPU 201 such as an IPL are stored, a RAM 203 which is used for a work area of the CPU 201, a HD 204 for storing various data including programs for the management system 50, etc., a hard disk drive (HDD) 205 for controlling various data reading and data writing of the HD 204 according to the control of the CPU 201, a medium drive 207 for controlling data reading and data writing (storage) of a recording medium 206 including a flash memory, a display 208 for displaying various information items including a cursor, a menu, a window, a character, or an image, a network interface (I/F) 209 for performing data communications by using the communication network 2, a keyboard 211 including a plurality of keys for inputting a character, a numerical value, various instructions, etc., a mouse 212 for selecting and executing various instructions, selecting a process target, moving the cursor, or the like, a compact disc read only memory (CD-ROM) drive 214 for controlling various data reading of a CD-ROM 213 as an example of a detachable recording medium, and a bus line 210 such as an address bus, a data bus, etc., for electrically connecting the above elements as shown in Fig. 4.

On the other hand, the relay apparatus 30, the program providing system 90, and the maintenance system 100 have similar hardware configurations as the above management system 50, and thus, the descriptions will be omitted.

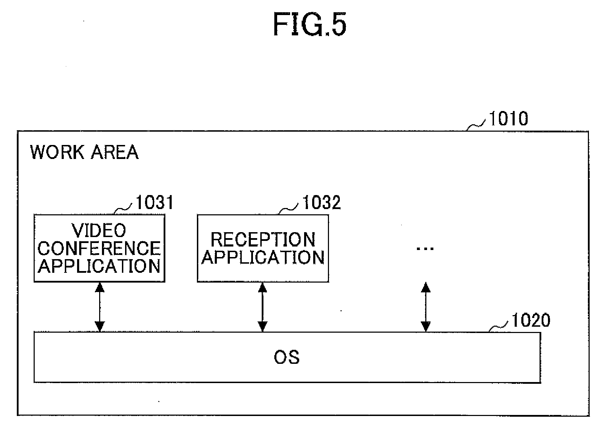

Fig. 5 is a software configuration of a terminal 10 according to an embodiment. As shown in Fig. 5, an OS 1020, the video conference application 1031, and the reception application 1032 are held in a work area 1010 of the RAM 103. The OS 1020 and the applications (1031, 1032) are installed in the terminal 10.

Further, the OS 1020 provides basic functions, and is basic software which controls the entire terminal 10. The video conference application 1031 is an application for connecting with another terminal 10 and performing the video conference. The reception application 1032 is an application for connecting with a terminal 10 of a call center, and communicating with an operator.

It should be noted that the above applications (1031, 1032) are just examples, and other applications may be installed. In the case where the other applications are installed, the other applications may be stored in the program providing system 90, and the other applications may be downloaded according to a request from the terminal 10. Further, in the case where two or more video conference applications are installed, video conference applications with different protocols such as the above (1) through (7) may be installed.

### «Functional configuration of embodiment»

Next, a functional configuration of the communication system of the present embodiment will be described.

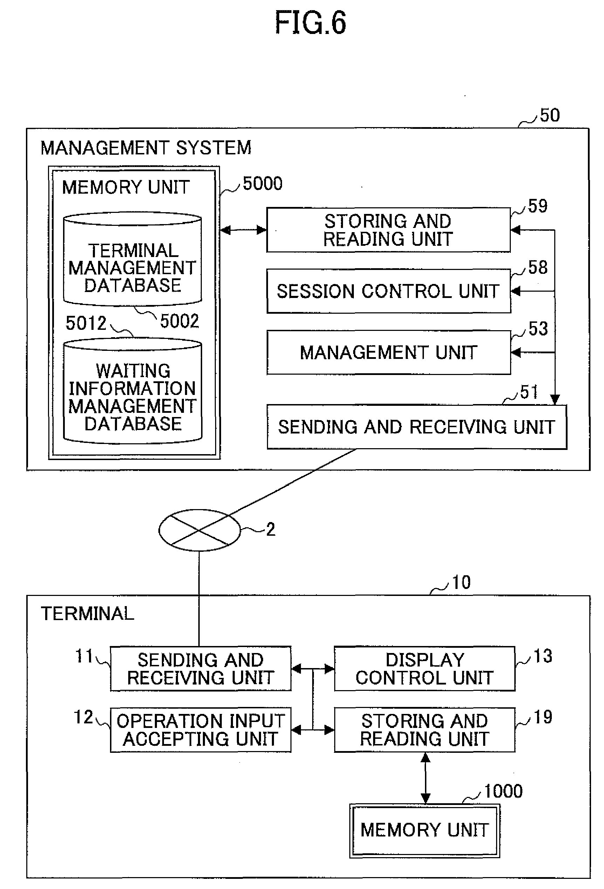

Fig. 6 is a functional block diagram of a terminal 10 and a management system 50 included as a part of a communication system 1 according to an embodiment. It should be noted that, in Fig. 6, the terminal 10 and the management 50 are connected to perform data communications via a communication network 2.

### <Functional configuration of communication terminal>

The terminal 10 includes a sending and receiving unit 11, an operation input receiving unit 12, a display control unit 13, and a storing and reading unit 19. The above units are functions which are realized by any one of the elements shown in Fig. 3 which operates according to instructions from the CPU 101 which executes a program read from the flash memory 104 and written to the RAM 103.

Further, the terminal 10 includes a memory unit 1000 including a ROM 102, a RAM 103, and a flash memory 104 as shown in Fig. 3.

Next, the functional configuration of the terminal 10 will be described in detail. It should be noted that when the functional configuration of the terminal 10 is described, relations between functions and main elements of the elements shown in Fig. 3, which are used for realizing the functions, will also be described.

The sending and receiving unit 11 is realized by instructions from the CPU 101 and the network I/F 111, and performs sending and receiving various data (or information) to and from a terminal, an apparatus, a system, etc., with which the sending and receiving unit 11 communicates.

The operation input accepting unit 12 is realized by instructions from the CPU 101, the operation buttons (108a, 108b, 108c, 108d, 108e) and the power supply switch 109, and accepts various inputs or various selections made by a user.

The display control unit 13 is realized by instructions from the CPU 101 and the display I/F 117, and controls outputting an image from the display 120 based on image data sent from the communication destination terminal 10.

The storing and reading unit 19 is realized by instructions from the CPU 101 and the SSD 105 or by instructions from the CPU 101, and performs a process of storing various data in the memory unit 1000 and reading the various data stored in the memory unit 1000.

### <Functional configuration of management system>

The management system 50 includes a sending and receiving unit 51, a management unit 53, a session control unit 58, and a storing and reading unit 59. The above units are functions or means which are realized by any one of elements shown in Fig. 4 which operates according to instructions from the CPU 201 which executes a program for the management system 50 read from the HD 204 and written to the RAM 203. Further, the management system 50 includes a memory unit 5000 including the HD 204. In the memory unit 5000, the databases (DB) including corresponding tables as shown below are included.

### (Terminal management table)

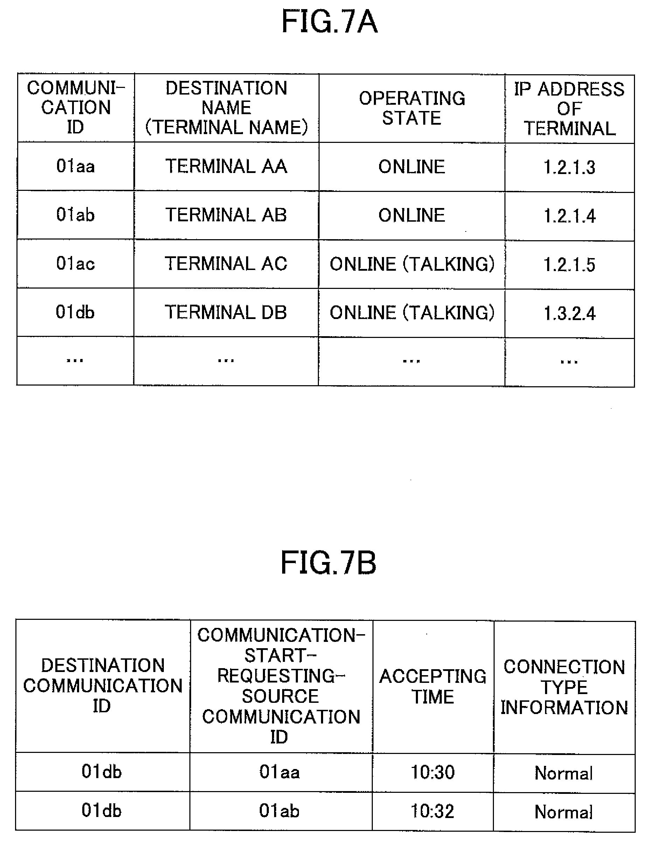

Fig. 7A is a conceptual diagram illustrating a terminal management table. In the memory unit 5000, a terminal management database (DB) 5002 including a terminal management table as shown in Fig. 7A is included. In the terminal management table, for each communication ID of a terminal 10, a destination name (terminal name) when the terminal 10 is a destination, an operating state of the terminal 10, and an IP address of the terminal 10 are associated with the communication ID and stored. It should be noted that the communication ID is information for identifying the terminal 10 as a communication destination in the communication system 1. The communication ID is not limited as long as it can identify the terminal 10 as a communication destination, and identification information of the terminal 10, account information of a user of the terminal 10, etc., are included as the communication ID. In the following, the descriptions will be continued assuming that communication IDs of the terminals (10aa, 10ab, 10ac, 10db) are "01aa, 01ab, 01bc, 01db", respectively. Further, an operation state "OFFLINE" indicates a state in which the terminal 10 is not connected to the management system 50. An operation state "ONLINE" indicates a state in which the terminal 10 is connected to the management system 50. An operation state "ONLINE (TALKING)" indicates a state in which the terminal 10 is connected to the management system 50, and is communicating with another terminal 10.

### (Waiting information management table)

Fig. 7B is a conceptual diagram illustrating a waiting information management table. In the memory unit 5000, a waiting information management database (DB) 5012 including a waiting information management table as shown in Fig. 7B is included. In the waiting information management table, with respect to the communication ID of the terminal 10 of an operator as a communication destination, a communication ID of a terminal 10 of a customer as a start requesting source which is waiting for a start of talking with the operator, accepting time of start request, and connection type information are associated with the communication ID of the terminal 10 of the operator, and stored. In the above connection type information, "N/W Error" which indicates a reconnection after disruption due to a network error, and "Normal" which indicates a connection other than the "N/W Error" are included. It should be noted that, as a network error, an error in which the terminal 10 is disconnected from the communication network 2 due to lack of bandwidth between the terminals 10 can be listed.

### <Functional configuration of management system>

Next, a functional configuration of the management system 50 will be described in detail. It should be noted that when the functional configuration of the management system 50 is described, relations between functions and main elements of the elements shown in Fig. 4, which are used for realizing the functions of the management system 50, will be also described.

The sending and receiving unit 51 is realized by instructions from the CPU 201 and the network I/F 209, and performs sending and receiving various data (or information) to and from a terminal, an apparatus, or a system via the communication network 2.

The management unit 53 is realized by instructions from the CPU 201 and performs a process of updating an operation state in the terminal management table in order to reflect the latest operation state.

The session control unit 58 is realized by instructions from the CPU 201, and controls a session for sending and receiving content data between the terminals 10. In the above control, establishing a session, controlling the terminal 10 to participate in the established session, and terminating the session are included. Further, the session control unit 58 performs measurement of a communication bandwidth of the communication network 2 between the terminals 10.

The storing and reading unit 59 is realized by instructions from the CPU 201 and the HDD 205 or by instructions from the CPU 201, and performs a process of storing various data in the memory unit 5000 and reading the various data stored in the memory unit 5000.

### <<Processes and operations of communication system 1>

Next, processes and operations of the communication system 1 will be described.

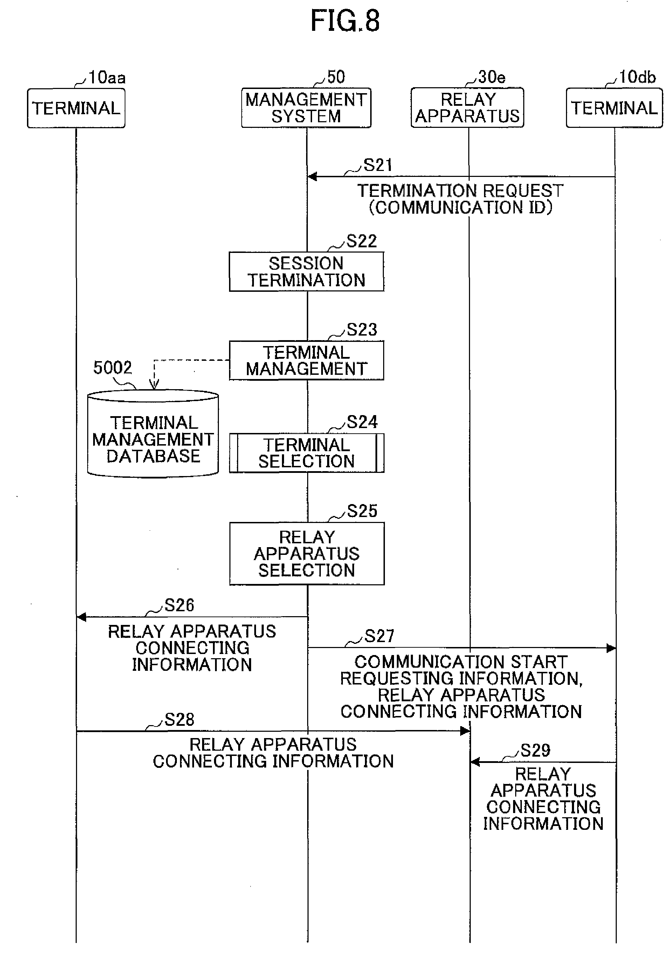

First, a process will be described in which a destination terminal 10db becomes available to start new communication and a terminal 10aa as a start requesting source which has been waiting for a start of communication with the terminal 10db starts the communication. Fig. 8 is a sequence diagram illustrating a process of starting communication. In each of the terminals (10aa, 10ab, 10ac), when a reception application 1032 is started, corresponding sending and receiving unit 11 sends a request to the management system 50 for starting communication with a terminal 10db of an operator. The terminal 10ac, which has sent a request for starting communication the earliest, is in communication with the terminal 10db. On the other hand, the terminal 10aa and the terminal 10ab are waiting for the start of the communication with the terminal 10db. At this time, the waiting information management table is in a state shown in Fig. 7B.

When the operation input accepting unit 12 of the terminal 10db accepts a request for terminating the communication with the terminal 10ac, the sending and receiving unit 11 sends a request for terminating the communication to the management system 50 (step S21). In the request for terminating the communication, a communication ID "01db" of the terminal 10db itself and a communication ID "01ac" of the terminal 10ac of the communication destination are included.

The session control unit 58 of the management system 50, based on the communication ID included in the request for terminating the communication, terminates a session for sending content data between the terminals (10ac, 10db) (step S22). With the above process, the communication between the terminals (10ac, 10db) is terminated.

When the communication between the terminals (10ac, 10db) is terminated, the management unit 53 updates operation states associated with the communication IDs of the terminals (10ac, 10db) from "ONLINE (TALKING)" to "ONLINE" (step S23).

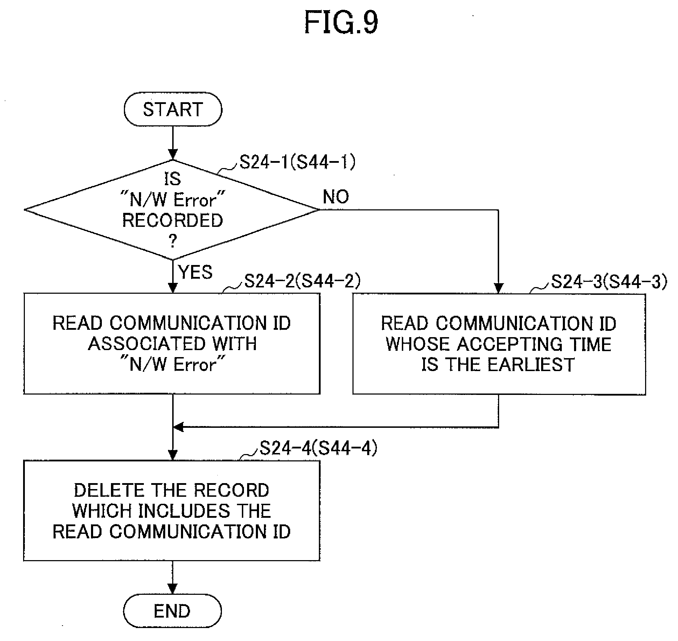

When the operation state of the terminal 10db is updated to "ONLINE" and the terminal 10db moves to a state in which new communication can be started, the session control unit 58 of the management system 50 selects a communication ID of a terminal 10 which should be connected to the terminal 10db from the communication IDs of the terminals 10 of the communication start requesting sources stored in the waiting information management table (step S24). A process of step S24 will be described referring to Fig. 9. Fig. 9 is a flowchart illustrating a process of selecting a terminal 10.

First, the session control unit 58, referring to a field of connection type information of the waiting information management table, determines whether "N/W Error" is recorded (step S24-1). In the case where it is determined that the "N/W Error" is recorded (YES in step S24-1), the storing and reading unit 59 selects and reads a communication ID, which is associated with the connection type information "N/W Error", of the communication start requesting sources associated with the communication ID "01db" of the destination in the waiting information management table (step S24-2). In the case where it is determined that "N/W Error" is not recorded (NO in step S24-1), the storing and reading unit 59 selects and reads a communication ID, whose accepting time is the earliest, of the communication start requesting sources associated with the communication ID "01db" of the destination in the waiting information management table (step S24-3).

When the communication ID is read in step S24-2 or in step S24-3, the storing and reading unit 59 removes a record from the waiting information management table in which record the read communication ID is included (step S24-4).

In the following, the description is continued in the case where the communication ID "01aa" of the communication start requesting source terminal 10aa, whose accepting time is the earliest, is read from the waiting information management table shown in Fig. 7B in step S24-3. It should be noted that, in this case, due to the process of step S24-4, the waiting information management table moves to a state as shown in Table 1.

**[Table 1]**

| DESTINATION COMMUNICATION ID | COMMUNICATION-START-REQUESTING-SOURCE COMMUNICATION ID | ACCEPTING TIME | CONNECTION TYPE INFORMATION |
|---|---|---|---|
| 01 db | 01ab | 10:32 | Normal |

Next, the session control unit 58 selects a relay apparatus 30 which relays image data and audio data between the terminal 10aa identified by the communication ID "01aa" read in step S24-3 and the corresponding destination terminal 10db (step S25). As a method for selecting the relay apparatus 30, a known method is used, including a selection method based on loads of the relay apparatuses 30, a selection method based on the location information of the terminals (10aa, 10db), or the like. In the following, the description will be continued in the case where the relay apparatus 30e is selected in step S25.

The sending and receiving unit 51 of the management system 50 sends relay apparatus connecting information for connecting the selected relay apparatus 30e to the communication start requesting source terminal 10aa (step S26). In the relay apparatus connecting information, an IP address of the relay apparatus 30e, authentication information, a port number, a session ID of a session for sending content data between the terminals (10aa, 10db), etc., can be included. Further, the sending and receiving unit 51 of the management system 50 sends to the destination terminal 10db communication start requesting information for requesting start of the communication between the terminals (10aa, 10db) and the relay apparatus connecting information for connecting to the relay apparatus 30e (step S27).

The sending and receiving unit 11 of the terminal 10aa is connected to the relay apparatus 30e by transmitting the relay apparatus connecting information to the relay apparatus 30e (step S28).

When the terminal 10aa is connected to the relay apparatus 30e, the sending and receiving unit 11 transmits image data based on an image taken by the camera 112 of the terminal 10aa and audio data based on sound collected by the mike 114, and requests for image data and audio data transmitted by the communication destination terminal 10db.

The sending and receiving unit 11 of the terminal 10db is connected to the relay apparatus 30e by transmitting to the relay apparatus 30e the relay apparatus connecting information transmitted from the management system 50 (step S29). When the terminal 10db is connected to the relay apparatus 30e, the sending and receiving unit 11 transmits image data based on an image taken by the camera 112 of the terminal 10db and audio data based on a sound collected by the mike 114, and requests for image data and audio data transmitted by the communication destination terminal 10aa.

When terminals (10aa, 10db) are connected to the relay apparatus 30e, a session between the terminals (10aa, 10db) is established. The relay apparatus 30e transmits the image data and the audio data transmitted from one of the terminals (10aa, 10db) to the other of the terminals (10db, 10aa). With the above process, it becomes possible for the terminals (10aa, 10db) to transmit the image data and the audio data to each other.

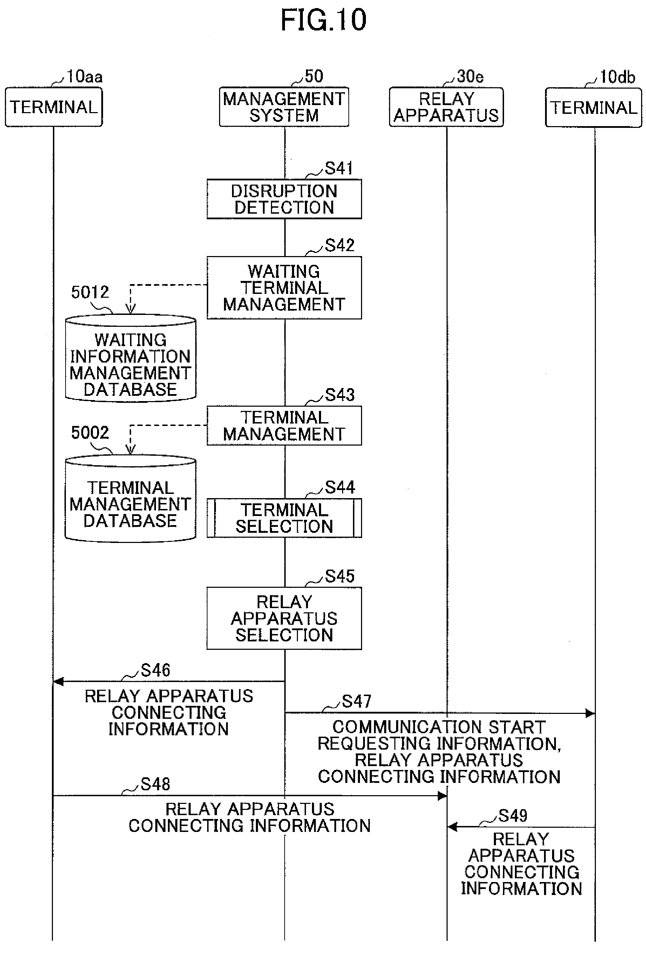

Next, referring to Fig. 10, a process will be described in which, after the communication of the terminal 10aa is disconnected due to an error of the communication network 2, the terminal 10aa is reconnected. Fig. 10 is a sequence diagram illustrating a process of reconnecting the terminal 10.

The session control unit 58 of the management system 50 measures a communication bandwidth of the communication network between the terminals (10aa, 10db) after the communication is established between the terminals (10aa, 10db) in the management system 50. A known method is used for measuring the communication bandwidth. In the case where time when the measured communication bandwidth is equal to zero Mbps exceeds a predetermined threshold, the session control unit 58 detects that the communication between the terminals (10aa, 10db) is disrupted due to a network error (step S41).

When the above disruption is detected, the storing and reading unit 59 stores, in the waiting information management table, accepting time and connection type information which are associated with the communication ID "01aa" of the terminal 10aa which is a start requesting source of the disrupted communication and the communication ID "01db" of the communication destination terminal 10db (step S42). With the above process, a request of the terminal 10aa for reconnection with the terminal 10db is accepted without having the request transmitted to the management system 50 by the terminal 10aa. Here, as the accepting time, the time when the disrupted communication between the terminals (10aa, 10db) is detected by the session control unit 58 is recorded. Further, as the connection type information, "N/W Error" indicating a reconnection necessitated by a network error is recorded. Table 2 shows the waiting information management table updated by the process of step S42.

**[Table 2]**

| DESTINATION COMMUNICATION ID | COMMUNICATION-START-REQUESTING-SOURCE COMMUNICATION ID | ACCEPTING TIME | CONNECTION TYPE INFORMATION |
|---|---|---|---|
| 01 db | 01ab | 10:32 | Normal |
| 01 db | 01aa | 10:36 | N/W Error |

When the communication disruption is detected, the storing and reading unit 59 updates operation states associated with the communication IDs of the terminals (10ac, 10db) from "ONLINE (TALKING)" to "ONLINE" (step S43).

When the operation state of the terminal 10db is updated to "ONLINE" and the terminal 10db moves to a state in which new communication can be started, the session control unit 58 of the management system 50 selects, according to processes similar to the processes of step S24-1 through S24-4, a communication ID of a terminal 10 which should be connected to the terminal 10db from the communication IDs of the terminals 10 of the communication start requesting sources stored in the waiting information management table (step S44-1 through S44-4, refer to Fig. 9).

In this case, according to a process of step S44-2, the communication ID "01aa" of the communication start requesting source associated with the connection type information "N/W Error" is read from the waiting information management table of Table 2. In other words, a higher priority is given to the terminal 10aa waiting for reconnection after the network error than the terminal 10ab whose accepting time is the earliest, and the terminal 10aa is selected as a connecting destination for the terminal 10db.

Subsequently, the terminals (10aa, 10db) are reconnected to each other according to the control of the management system 50. Processes of the reconnection of the terminals (10aa, 10db) are similar to the processes of the above steps S25 through S29, and thus, the description will be omitted (steps S45 through S49).

### «Modified embodiment A»

Next, a modified embodiment A is another embodiment of the present invention, and the difference from the above embodiment will be described.

In step S42, the storing and reading unit 59, at the timing of storing the connection type information "N/W Error" in the waiting information management table, stores a number of times (number of disruptions) the communication of the terminals (10aa, 10db) is disrupted due to a network error before any one of the terminals (10aa, 10db) transmits a termination request, in an area of the memory unit 5000 different from the waiting information management table.

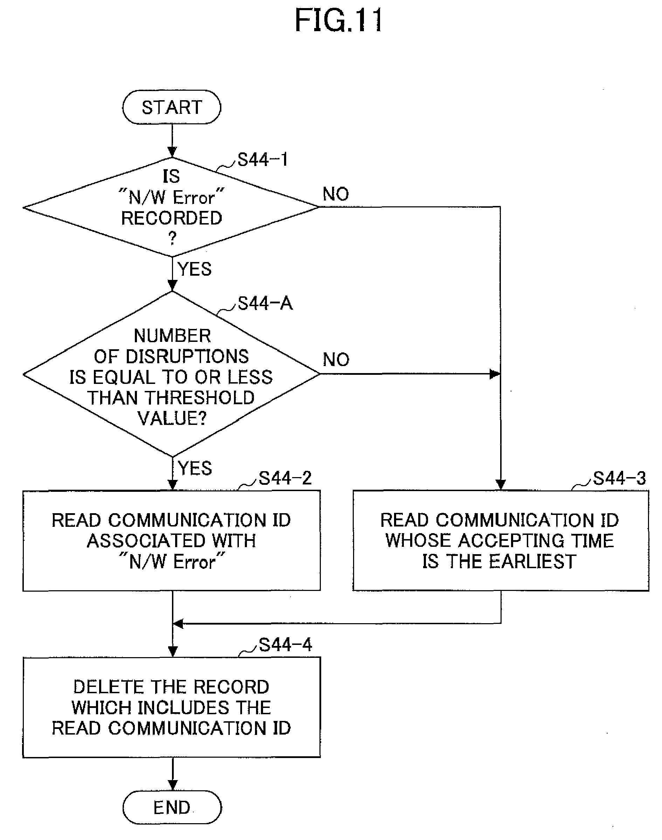

Fig. 11 is a flowchart illustrating a process of selecting a terminal 10 in the modified embodiment A. In the case where it is determined that the connection type information "N/W Error" is recorded in the waiting information management table (YES in step S44-1), the session control unit 58 determines whether the number of disruptions stored in the memory unit 5000 is equal to or less than a predetermined threshold value (e.g., three times) (step S44-A).

In the case where it is determined that the number of disruptions is equal to or less than the predetermined threshold value, the storing and reading unit 59 selects and reads the communication ID "01aa" which is associated with the connection type information "N/W Error" of the communication IDs of the start requesting sources associated with the destination communication ID "01db" in the waiting information management table of Table 2 (step S44-2). On the other hand, in the case where it is determined that the number of disruptions is more than the predetermined threshold value, the storing and reading unit 59 selects and reads the communication ID "01ab" whose accepting time is the earliest of the communication IDs of the start requesting sources associated with the destination communication ID "01db" in the waiting information management table of Table 2 (step S44-3). In other words, when the number of disruptions of the communication of the terminal 10aa due to a network error exceeds the predetermined threshold value, a higher priority is no longer given to the terminal 10aa to be selected as a connection destination of the terminal 10db. According to the modified embodiment A, it becomes possible to prevent from blocking for a long time the connection of another terminal 10ab which has been waiting for the start of communication with the terminal 10db.

### «Modified embodiment B»

Next, a modified embodiment B is another embodiment of the present invention, and the difference from the above embodiments will be described.

In step S42, the storing and reading unit 59, at the timing of storing the connection type information "N/W Error" in the waiting information management table, stores time when the disruption is detected (disruption time) in an area of the memory unit 5000 different from the waiting information management table.

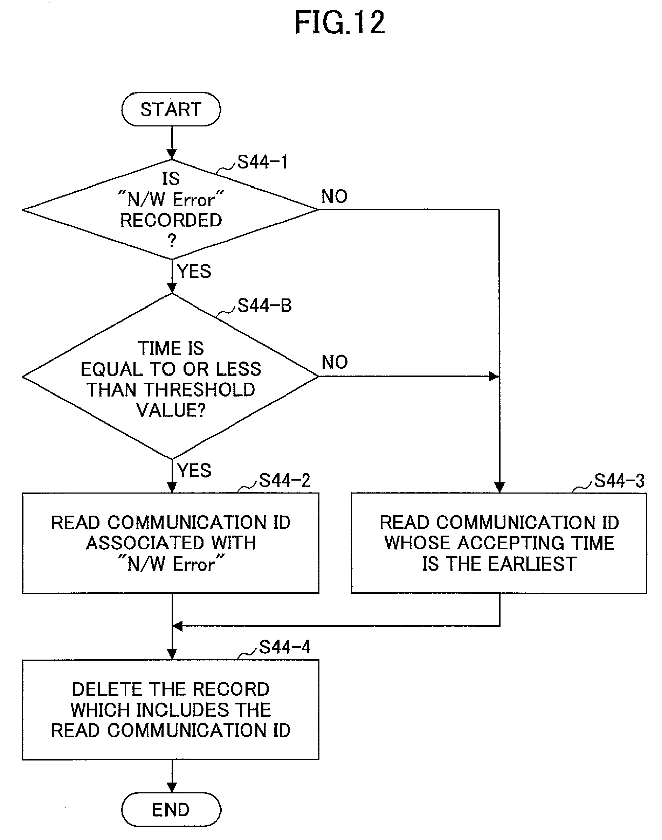

Fig. 12 is a flowchart illustrating a process of selecting a terminal 10 in the modified embodiment B. In the case where it is determined that the connection type information "N/W Error" is recorded in the waiting information management table (YES in step S44-1), the session control unit 58 determines whether time from the disruption time stored in the memory unit 5000 to the current time is equal to or less than a predetermined threshold value (e.g., three minutes) (step S44-B).

In the case where it is determined that the time is equal to or less than the predetermined threshold value, the storing and reading unit 59 reads the communication ID "01aa" which is associated with the connection type information "N/W Error" of the communication IDs of the start requesting sources associated with the destination communication ID "01db" in the waiting information management table of Table 2 (step S44-2). On the other hand, in the case where it is determined that the time is greater than the predetermined threshold value, the storing and reading unit 59 selects and reads the communication ID "01ab" whose corresponding accepting time is the earliest of the communication IDs of the start requesting sources associated with the destination communication ID "01db" in the waiting information management table of Table 2 (step S44-3). In other words, when the predetermined time elapses after the communication of the terminal 10aa is disconnected due to a network error, a higher priority is no longer given to the terminal 10aa to be selected as a connection destination of the terminal 10db. According to the modified embodiment B, it becomes possible to prevent from blocking for a long time the connection of the terminal 10ab which has been waiting for a start of communication with the terminal 10db when the terminal 10aa is unable to reconnect for a long time.

### «Effect of Embodiment»

When communication between the communication start requesting source terminal 10aa and the destination terminal 10db is disrupted, the waiting information management database (DB) 5012 of the management system 50 (an example of a management means) stores connection type information "N/W Error" (an example of specifying information) used for specifying the communication start requesting terminal 10aa. When two or more terminals (10aa, 10ab) are requesting a start of communication with the above destination terminal 10db, the session control 58 (an example of a selection means) selects from the terminals (10aa, 10ab) the terminal 10aa which should be connected to the destination terminal 10db. With the above operations, after the communication between the terminals (10aa, 10db) is disrupted, it becomes possible to establish a reconnection between the terminals (0aa, 10db) before a call is provided for the terminal 10ab which has requested a start of communication beforehand.

It should be noted that in the management system 50, the waiting information management database (DB) 5012 stores the connection type information "N/W Error" when the communication is disrupted before a communication terminating request is received. In the case where the terminals 10 are communicating with each other via a communication network 2 such as the Internet or a mobile telephone network, when the bandwidth becomes insufficient due to a network environment change, the communication may be disrupted unintentionally without a termination request from the terminals. According to the above embodiment, it becomes possible to give a higher priority of reconnection to the terminal 10 which has been disconnected unintentionally.

The waiting information management database (DB) 5012 stores the connection type information "N/W Error" associated with the communication ID (an example of identifying information) of the communication start requesting source terminal 10. The session control unit 58 selects the terminal 10 which is identified by the communication ID associated with the connection type information "N/W Error" in the waiting information management database (DB) 5012 as the terminal 10 to be connected to the destination terminal 10. With the above operations, the terminal 10 which should be reconnected can be easily identified.

According to the modified embodiment A, in the management system 50, in the case where the number of communication disruptions before receiving the communication terminating request is equal to or less than the predetermined threshold value, the session control unit 58 selects the terminal 10 of two or more terminals 10 which should be connected to the destination terminal 10 based on the connection type information "N/W Error" stored in the waiting information management database (DB) 5012. According to the modified embodiment A, it becomes possible to prevent from blocking for a long time the connection of the terminal 10ab which has been waiting for the start of communication with the terminal 10db when the terminal 10aa is repeatedly disconnected.

According to the modified embodiment B, in the case where the elapsed time after the communication is disrupted is less than the predetermined time, the session control unit 58 selects the terminal 10 of two or more terminals 10 which should be connected to the destination terminal 10 based on the connection type information "N/W Error" stored in the waiting information management database (DB) 5012. According to the modified embodiment B, it becomes possible to prevent from blocking for a long time the connection of the terminal 10ab which has been waiting for a start of communication with the terminal 10db when the terminal 10aa is unable to reconnect for a long time.

The session control unit 58 (an example of a detection means) detects a disruption of the communication session between the terminals 10 based on a measurement result of the communication bandwidth between the terminals 10. When the session control unit 58 detects the disruption, the waiting information management database (DB) 5012 stores the connection type information "N/W Error" used for specifying the terminal 10 which is a communication start requesting source. With the above operations, when communication is disrupted, the connection type information "N/W Error" can be automatically stored in the waiting information management database (DB) 5012.

When the terminal 10 which should be connected is selected by the session control unit 58, the management system 50 performs call control for connecting the selected terminal 10 with the destination terminal 10. With the above operations, the management system 50 can establish a reconnection between the terminals 10 without receiving a reconnection request from the terminals 10.

### «Supplementary description of embodiments»

It should be noted that the management system 50 in the above embodiments may include a single computer, or include two or more computers to which corresponding units (functions or means) are arbitrarily assigned.

Further, a recording medium in which a terminal program, a relay apparatus program, and a communication management program of the communication system 1 are stored, an HD 204 in which the above programs are stored, and a program providing system 90 including the HD 204 can be provided as program products in the country or abroad.

In the communication system 1, the "video conference" is used as a term which can be replaced by "TV conference".

Further, in the above communication system 1, as an example of the communication system 1, a case of a video conference system has been described, but the case is not limited to it. The communication system 1 may be, for example, an audio conference system or a personal computer (PC) screen sharing system. Further, the communication system 1 may be a communication system of an Internet protocol (IP) telephone, an Internet phone, or a mobile telephone. In the above cases, for example, the terminal 10 corresponds to a phone such as a mobile telephone terminal.

Further, the management system 50 may connect, based on a request of a terminal 10, etc., the destination terminal 10 with a terminal 10 which is different from the terminal 10 waiting for the reconnection according to the "N/W Error".

The present invention is not limited to the specifically disclosed embodiments, and variations and modifications may be made without departing from the scope of the present invention.

The present application is based on and claims the benefit of priority of Japanese Priority Application No. 2015-022901 filed on February 9, 2015, the entire contents of which are hereby incorporated herein by reference.

## Claims

1. A management system comprising:
a management unit configured to, when a communication between a communication-start-requesting-source communication terminal and a destination communication terminal is disrupted, store specifying information for specifying the communication-start-requesting-source communication terminal; and
a selection unit configured to, when a plurality of the communication terminals are requesting a communication start with the destination communication terminal, select one of the plurality of the communication terminals to be connected to the destination communication terminal based on the specifying information stored by the management unit.

2. The management system according to claim 1, wherein
when the communication is disrupted before a communication termination request is received, the management unit stores the specifying information for specifying the communication-start-requesting-source communication terminal.

3. The management system according to claim 1 or 2, wherein
the management unit stores identification information of the communication-start-requesting-source communication terminal associated with the specifying information, and
the selection unit selects one of the communication terminals identified by the identification information, associated with the specifying information and stored by the management unit, as a communication terminal to be connected to the destination communication terminal.

4. The management system according to claim 2, wherein
in the case where a number of times the communication is disrupted before receiving information related to termination of the communication is equal to or less than a predetermined threshold value, the selection unit selects one of the plurality of the communication terminals to be connected to the destination communication terminal based on the specifying information stored in the management unit.

5. The management system according to any one of claims 1 through 3, wherein in the case where an elapsed time from when the communication is disrupted is less than a predetermined time, the selection unit selects one of the plurality of the communication terminals to be connected to the destination communication terminal based on the specifying information stored in the management unit.

6. The management system according to any one of claims 1 through 5, further comprising:
a detection unit configured to detect the disruption of the communication,
wherein
when the detection unit detects the disruption of the communication, the management unit stores the specifying information for specifying the communication-start-requesting-source communication terminal.

7. The management system according to any one of claims 1 through 6, wherein the management system controls a connection between the communication terminal selected by the selection unit and the destination communication terminal.

8. A communication system including the management system according to any one of claims 1 through 7 and the communication terminals.

9. A management method for causing a management system with a management unit configured to, when a communication between a communication-start-requesting-source communication terminal and a destination communication terminal is disrupted, store specifying information for specifying the communication-start-requesting-source communication terminal, to perform a process of:
when a plurality of communication terminals are requesting a start of a communication with the destination communication terminal, based on the specifying information stored in the management unit, selecting one of the plurality of the communication terminals to be connected to the destination communication terminal.

10. A computer-readable recording medium having a program embodied therein for causing the management system to execute the method according to claim 9.
